# EUROPEAN PATENT APPLICATION

(11) **EP 1 506 902 A2**
(43) Date of publication of application: **16.02.2005**
(21) Application number: 04019075.3
(22) Date of filing: 11.08.2004
(51) Int. Cl.: B62B 5/00, B62D 51/04

(54) **Load transport assembly**

(30) Priority: 13.08.2003 GB 0318956
(71) Applicant: Mastermover International Limited, Ashbourne, Derbyshire DE6 1AS (GB)
(72) Inventor: Caborn, Christopher, Ashbourne, Derbyshire DE6 1AS (GB)
(74) Representative: Wardley, Diana Mary

(57) **Abstract**

The load transport assembly (10) has:
a) a body (12) with a front region (14), a rear region (16) and a central region (18);
b) a pair of ground engaging stabilising wheels (42) mounted for rotation on the rear region (16) of the body (12);
c) a load transfer device (20), mounted on the front region (14) of the body (12), including a coupling (26) which is moveable on a generally vertical axis (X) and which is adapted to engage with and bear the load;
d) drive means (22) mounted on the body (12);
e) a main support wheel assembly (24) mounted on the front region (14) of the body (12) and driven by the drive means (22); and
f) control means which is operable to permit an operator to control the load transfer device (20) and drive means (22).

Furthermore it is characterised in that the main support wheel assembly (24) includes two drive wheels (32) rotatably mounted on each end of an axle (30) which extends laterally of the body (12), and the drive means (22) includes two drive motors (22a,22b) one connected to each drive wheel (32) such that each drive wheel (32) is driveable independently of the other, and further characterised in that the load transport device (20) is located such that the generally vertical axis (X) on which it moves passes through the centre of the axle (30).

## Description

The invention relates to a load transport assembly and in particular to a pedestrian operated powered load transport assembly adapted for towing large heavy items such as for example articulated lorry trailers.

In the haulage industry it is often desirable to move articulated lorry trailers around a goods yard. Generally this is done by hitching the trailers in succession to a normal lorry cab which is then driven around the yard by a qualified Heavy Goods Vehicle (HGV) driver. This is time consuming due to the time taken to hitch and unhitch trailers from and the cab, and shifts spent "shunting" in a goods yard are generally disliked by the drivers.

There are also alternative large and/or heavy vehicles which can be used to move articulated lorry trailers around a yard, but they do not overcome the basic problems described above.

Powered tugs which can be used to transport loads under the control of a pedestrian operator are also know, such as that described in the Applicant's UK patent No. GB2279934B, but none are available which can transport loads of the size of a articulated lorry trailer with sufficient manoeuvrability for the confined spaces of such yards.

It is an aim of the present invention to provide a load transport assembly which mitigates the above described problems.

According to the present invention there is provided a load transport assembly having:
a) a body with a front region, a rear region and a central region;
b) a pair of ground engaging stabilising wheels mounted for rotation on the rear region of the body;
c) a load transfer device, mounted on the front region of the body, including a coupling which is moveable on a generally vertical axis and which is adapted to engage with and bear the load;
d) drive means mounted on the body;
e) a main support wheel assembly mounted on the front region of the body and driven by the drive means, and
f) control means which is operable to permit an operator to control the load transfer device and drive means;
wherein the load transport assembly is arranged such that when the load transfer device is bearing the load the ground engaging stabilising wheels are lifted from the ground, characterised in that the main support wheel assembly includes two drive wheels rotatably mounted on each end of an axle which extends laterally of the body, and the drive means includes two drive motors one connected to each drive wheel such that each drive wheel is driveable independently of the other, and characterised in that the load transport device is located such that the generally vertical axis on which it moves passes through the centre of the axle.

Conveniently the load transfer device is hydraulically operated.

The load transport device may conveniently further includes batteries, mounted in the central region of the body, to power the drive means and load transfer device.

Preferably the drive wheels are larger than the ground engaging stabilising wheels.

Preferably the control means is constructed and arranged for use by a pedestrian operator.

When a load transport device according to the invention is specifically adapted to transport trailers having air brakes it further includes a pressurised air system for coupling to and operation of the trailer air brakes.

An embodiment of a load transport assembly according to the invention will now be described, by way of example only, with reference to the accompanying drawings, in which:
Figure 1 is a front perspective view of a load transport assembly according to the invention;
Figure 2 is a rear perspective view of the load transport assembly of Figure 1;
Figure 3 is a side view of the load transport assembly of Figure 1;
Figure 4 is a front view of the load transport assembly of Figure 1; and
Figure 5 is a plan view of the load transport assembly of Figure 1,
all of the Figures showing the load transport assembly with it's bodywork removed to show the internal components.

Referring to the Figures, there is shown a load transport assembly 10 (herein after referred to as a tractor) having a body 12 comprising a front region 14, a rear region 16 and a central region 18.

The front region 14 of the body 12 includes a load transfer device 20, drive means in the form of two electric motors 22a and 22b, and a main support wheel assembly 24.

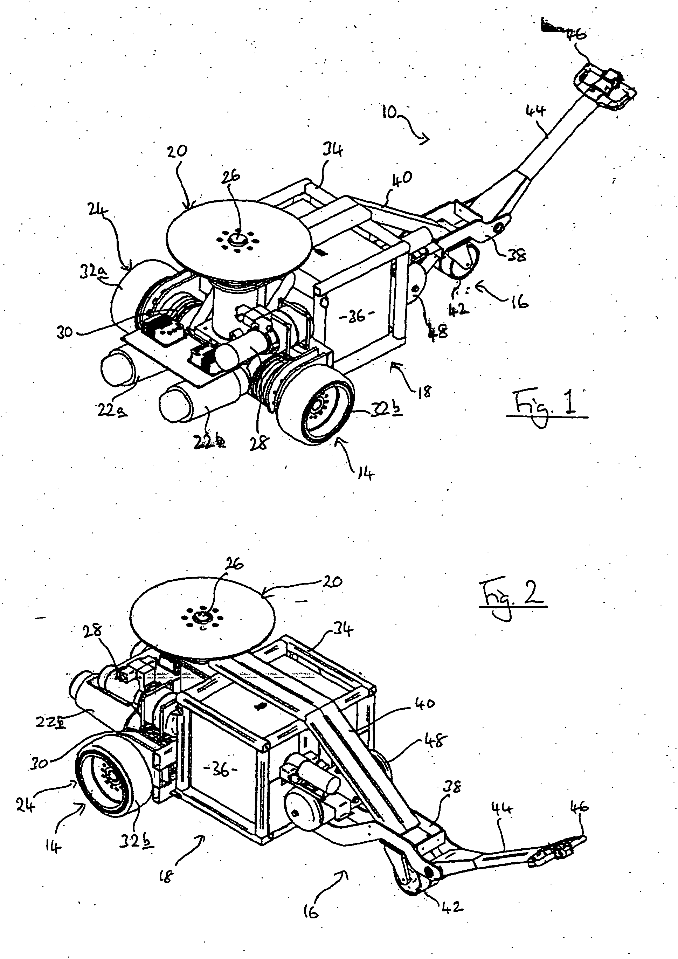

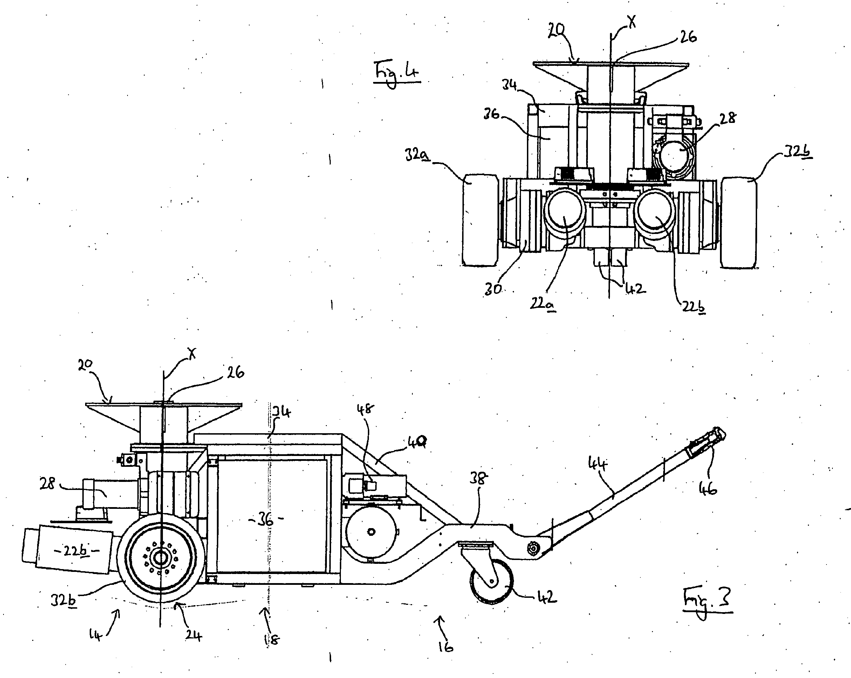

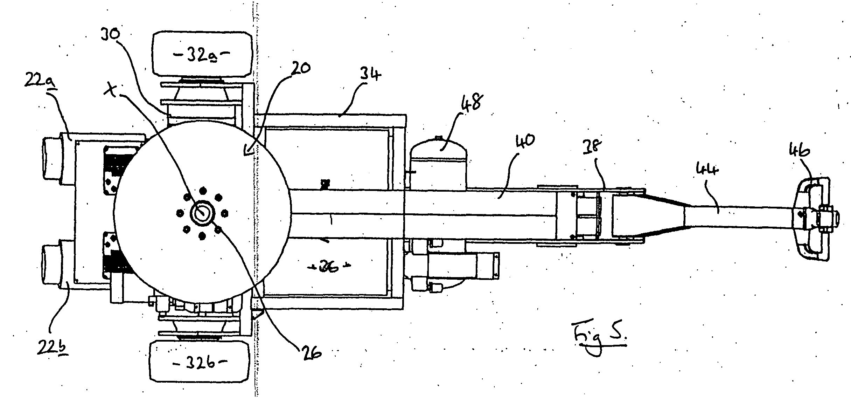

The load transfer device is fully described in the Applicant's earlier UK patent application No. GB0307785.6 and European patent application No. EP03007688.9 and therefore will not be described in detail here. However it includes a coupling 26 for receiving a hitch member of a vehicle trailer to be transported by the tractor 10, and lifting means in the form of a hydraulic ram (not shown) operable by means of a hydraulic system 28 to raise and lower the coupling 26 on a principle axis X as shown in Figures 3 to 5.

The main support wheel assembly 24 comprises an axle 30 extending laterally of the front region 14 of the body 12 with, rotatably mounted on each end, a main support wheel 32a and 32b respectively. The main support wheel 32a is driven by electric motor 22a whilst the main support wheel 32b is driven by electric motor 22b, and thus are controllable completely independently of each other.

The central region 18 of the body 12 includes a main frame 34 surrounding a battery container 36 inside which are located batteries (not shown) which power the electric motors 22 and the hydraulic system 28.

The rear region 16 of the body 12 includes a lower frame portion 38 extending rearwardly and upwardly from a lower part of the main frame 34, and an upper frame portion 40 extending rearwardly and downwardly from an upper part of the main frame 34 to join the lower frame portion 38 part way along it's length at a point below which two ground engaging stabilising wheels 42 are mounted for rotation around horizontal and vertical axes. The lower frame portion 38 extends rearwardly beyond the two ground engaging stabilising wheels 42, and at it's rearward end a handle 44 is pivotally mounted on a horizontal axis. At its distal end the handle 44 carries a grip portion 46 bearing controls (not shown) for control of the load transfer device 20 and the driving of the main support wheels 32.

The rear region 16 also includes, located between the lower and upper frame portions 38, 40, a pressurised air system 48 for connection to and operation of the air brakes of the vehicle trailer to be transported by the load transport assembly 10.

The tractor 10 is specifically adapted for transport of articulated lorry trailers of the kind having non-steering wheels at their rear end and a hitch and legs at their front end. When the trailers are connected to a lorry cab unit via the hitch the legs are folded up underneath the trailer, but when no lorry cab is connected to the trailer via the hitch the legs are down and the trailer stands on the legs at the front and the wheels at the rear.

The tractor 10 is operated as follows. With all four wheels 22, 42 on the ground the pedestrian operator uses the controls to drive it into position relative to the trailer to be transported, that is into a position with the coupling 26 of the load transfer device 20 located directly beneath a hitch part of the trailer at the front end thereof. The load transfer device 20 is then raised up, using the controls, underneath the hitch part until the weight of the front part of the trailer is taken off it's legs and onto the load transfer device 20. As the load transfer device 20 is located with it's principle axis X above the centre of the axle 30 the load is thus transferred to the main support wheels 32 of the tractor 10. Because of the detailed construction of the tractor 10 the action of transferring the weight in this way may also lift the ground engaging stabilising wheels 42 off the ground, such that only the main support wheels 32 are thus on the ground, although they may simply have the majority of the weight taken off them but remain in contact with the ground.

The trailer air brakes are connected to the pressurised air system 48 such that they can be released to enable the trailer to be moved.

The pedestrian operator then operates the controls to drive the main support wheels 32 as necessary to move the trailer to it's next location. The control of the two electric motors 22 is entirely independent such that the wheels 32 can be driven at different speeds and in different directions simultaneously in order to steer the tractor 10 as required. Thus if the two main support wheels 32 are driven in opposite directions at the same speed the tractor rotates about the principle axis X of the load transfer device, but if they are driven in the same direction and at the same speed the tractor 10 moves in a straight line. Combinations, of speed and relative direction of drive of the wheels 32, in between these two extremes mean that the tractor 10 is very manoeuvrable thus enabling the trailers to be moved around crowded goods yards more easily than has previously been possible, and furthermore by a pedestrian operator rather than a qualified heavy goods vehicle driver.

Once the trailer is in the desired location it's brakes are reapplied using the pressured air system 48, which is then disconnected. Then the controls are used to operate the load transfer device 20 to lower the coupling 26 and thus place the front of the trailer back onto it's legs.

It will be obvious that modifications may be made to the embodiment of tractor described above without departing from the scope of the invention. For example the pair of ground engaging stabilising wheels 42 may be replaced with a single castor wheel.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A load transport assembly (10) having:
a) a body (12) with a front region (14), a rear region (16) and a central region (18);
b) a pair of ground engaging stabilising wheels (42) mounted for rotation on the rear region of the body;
c) a load transfer device (20), mounted on the front region of the body, including a coupling (26) which is moveable on a generally vertical axis (X) and which is adapted to engage with and bear the load;
d) drive means (22a, 22b) mounted on the body;
e) a main support wheel assembly (24) mounted on the front region of the body and driven by the drive means;
f) control means which is operable to permit an operator to control the load transfer device and drive means;
**characterised in that** the main support wheel assembly includes two drive wheels (32a, 32b) rotatably mounted on each end of an axle (30) which extends laterally of the body, and the drive means includes two drive motors (22a, 22b) one connected to each drive wheel such that each drive wheel is driveable independently of the other, and **characterised in that** the load transport device is located such that the generally vertical axis on which it moves passes through the centre of the axle.

2. A load transport assembly according to claim 1 **characterised in that** the load transfer device is hydraulically operated.

3. A load transport assembly according to claim 1 or 2 **characterised in that** it further includes batteries, mounted in the central region of the body, to power the drive means and load transfer device.

4. A load transport assembly according to any one of the preceding claims **characterised in that** the drive wheels are larger than the ground engaging stabilising wheels.

5. A load transport assembly according to any one of the preceding claims **characterised in that** the control means is constructed and arranged for use by a pedestrian operator.

6. A load transport assembly according to any one of the preceding claims **characterised in that** it is specifically adapted to transport trailers having air brakes and further includes a pressurised air system (48) for coupling to and operation of the trailer air brakes.
